# EUROPÄISCHE PATENTSCHRIFT

(11) **EP 2 632 985 B1**
(45) Veröffentlichungstag und Bekanntmachung des Hinweises auf die Patenterteilung: **28.01.2015**
(21) Anmeldenummer: 11773729.6
(22) Anmeldetag: 24.10.2011
(51) Int. Cl.: C08L 67/04, D01D 5/42, D01F 6/92

(54) **VERWENDUNG VON POLYMERMISCHUNGEN ZUR HERSTELLUNG VON FOLIENBÄNDCHEN**
USE OF POLYMER BLENDS FOR PRODUCING SLIT FILM TAPES
UTILISATION DE MÉLANGES DE POLYMÈRES POUR LA FABRICATION DES BANDELETTES EN FEUILLE

(30) Priorität: 27.10.2010 EP 10189062
(43) Veröffentlichungstag der Anmeldung: 04.09.2013
(73) Patentinhaber: BASF SE, 67056 Ludwigshafen (DE)
(72) Erfinder: AUFFERMANN, Jörg, 67251 Freinsheim (DE)
(86) Internationale Anmeldenummer: PCT/EP2011/068495
(87) Internationale Veröffentlichungsnummer: WO 2012/055796

(56) Entgegenhaltungen:
- EP-A2- 1 279 755
- DE-A1-102008 018 964
- GB-A- 954 110
- DATABASE WPI Week 200582 Thomson Scientific, London, GB; AN 2005-810596 XP002666526, & WO 2005/103151 A1 (DOKURITSU GYOSEI HOJIN SANGYO GIJUTSU SO) 3. November 2005 (2005-11-03)

## Beschreibung

Die vorliegende Erfindung betrifft die Verwendung von Polymermischungen zur Herstellung von Folienbändchen enthaltend:
A) 30 bis 50 Gew.- % eines biologisch abbaubaren, aliphatisch-aromatischen Polyesters erhältlich durch Kondensation von:
   i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 30 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
   v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
   vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
B) 50 bis 70 Gew.-% Polymilchsäure
   und
C) 0 bis 2 Gew.-% eines Verträglichkeitsvermittlers.

Folienbändchen sind in der Literatur (die Kunststoffe, Kunststoff Handbuch Band 1, Hanser Verlag 1990) insbesondere aus Polyethylen, Polypropylen und Polyethylenterephthalat beschrieben. Daraus hergestellte Artikel wie Säcke, Bindegarn, Gewebe wie Teppich-Grundgewebe, Geotextilien oder Kunstrasen haben den Nachteil, dass sie nicht biologisch abbaubar sind und wenn sie in die Natur gelangen ein Umweltproblem darstellen.

Die EP 1 279 755 A2 beschreibt Folienbändchen auf Basis von Polyestern.

Biologisch abbaubare Monofilamente sind in der Literatur (Biodegradable and sustainable fibres, Woodhead Publishing Limited, 2005) beschrieben. Diese Filamente/Fasern sind aufgrund ihrer fehlenden Steifigkeit und/oder Festigkeit für zahlreiche Anwendungen nicht geeignet.

Ziel der vorliegenden Erfindung war es deshalb, dünne biologisch abbaubare Folienbändchen mit verbesserten mechanischen Eigenschaften bereitzustellen, die anschließend zu Zwirnen verwirkt oder zu Geweben verwoben werden können.

Überraschenderweise liefern die eingangs erwähnten Polymermischungen Folienbändchen mit hoher Festigkeit und hohem Elastizitätsmodul.

Zur Herstellung von biologisch abbaubaren Folienbändchen sind die eingangs erwähnten Polymermischungen besonders gut geeignet, die aus einem aliphatisch/aromatischen (teilaromatischen) Polyester A und dem Mischungspartner B: Polymilchsäure bestehen.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₆-C₁₈-Dicarbonsäuren wie Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Wie eingangs erwähnt sind für das erfindungsgemäße Verfahren zur Herstellung von Folienbändchen biologisch abbaubare, aliphatisch-aromatischer Polyester A geeignet, die enthalten:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs.

Bevorzugt eingesetzte aliphatisch-aromatischen Polyester A enthalten:
i) 52 bis 65 und insbesondere 58 mol %, bezogen auf die Komponenten i bis ii, eines oder mehrerer Dicarbonsäurederivate oder Dicarbonsäuren ausgewählt aus der Gruppe bestehend aus Bernsteinsäure, Azelainsäure, Brassylsäure und vorzugsweise Adipinsäure, insbesondere bevorzugt Sebazinsäure;
ii) 48 bis 35 und insbesondere 42 mol %, bezogen auf die Komponenten i bis ii, eines Terephthalsäurederivats;
iii) 98 bis102 mol %, bezogen auf die Komponenten i bis ii, 1,4-Butandiol und
iv) 0 bis 2 Gew.-%, vorzugsweise 0, 01 bis 2 Gew.-%, bezogen auf das Gesamtgewicht der Komponenten i bis iii, eines Kettenverlängerers und/oder Vernetzers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere eines epoxidhaltigen Poly(meth)acrylats) und/oder einem mindestens trifunktionellen Alkohol oder einer mindestens trifunktionellen Carbonsäure.

Zur Herstellung von Folienbändchen sind insbesondere aliphatisch-aromatische Polyester mit einem hohen Anteil an aliphatischer Dicarbonsäure von 52 bis 65 und insbesondere bevorzugt von 52 bis 58 mol %, geeignet. Mit einem höheren Anteil der aliphatischen Dicarbonsäure in den aliphatisch-aromatischen Polyestern lassen sich dünnere Schichten realisieren.

Als aliphatische Dicarbonsäuren eignen sich vorzugsweise Adipinsäure und insbesondere bevorzugt Sebazinsäure. Sebazinsäurehaltige Polyester haben den Vorteil, dass sie auch als nachwachsender Rohstoff zur Verfügung stehen sind und sich zu dünneren Folien ausziehen lassen.

Die Synthese der beschriebenen Polyester A erfolgt nach den in WO-A 92/09654, WO-A 96/15173 oder vorzugsweise in WO-A 09/127555 und WO-A 09/127556 beschriebenen Verfahren, vorzugsweise, in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Die Polyester A werden anschließend in einem zweiten Schritt nach den in WO-A 96/15173 und EP-A 488 617 beschriebenen Verfahren hergestellt. Der Präpolyester wird mit Kettenverlängeren vib), beispielsweise mit Diisocyanaten oder mit epoxidhaltigen Polymethacrylaten in einer Kettenverlängerungsreaktion zu einem Polyester mit einer VZ von 50 bis 450 mL/g, vorzugsweise 80 bis 250 mL/g umgesetzt.

In der Regel werden 0,01 bis 2 Gew-%, vorzugsweise 0,1 bis 1,0 Gew.-% und insbesondere bevorzugt 0,1 bis 0,3 Gew.-% bezogen auf das Gesamtgewicht der Komponenten i bis iii, eines Vernetzers (iva) und/oder Kettenverlängerers (ivb) ausgewählt aus der Gruppe bestehend aus: einem polyfunktionellen Isocyanat, Isocyanurat, Oxazolin, Epoxid, Carbonsäureanhydrid , einem mindestens trifunktionellen Alkohol oder einer mindestens trifunktionellen Carbonsäure eingesetzt. Als Kettenverlängerer ivb kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. die Viskosität bei höheren Schergeschwindigkeiten wird geringer.

Beispiele für Kettenverlängerer werden im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat ivb werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphe-nylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexa-methylendiisocyanat basieren, beispielsweise cyclische Trimere, Pentamere oder höhere Oligomere des 1,6-Hexamethylendiisocyanats.

2,2'-Bisoxazoline sind im allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazo-linyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Die Polyester A weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die aliphatische Dicarbonsäure i wird in 40 bis 70 mol % vorzugsweise 52 bis 65 mol% und insbesondere bevorzugt 52 bis 58 mol%, bezogen auf die Säurekomponenten i und ii eingesetzt. Sebazinsäure, Azelainsäure und Brassylsäure sind aus nachwachsenden Rohstoffen, insbesondere aus Rizinusöl zugänglich.

Die Terephthalsäure ii wird in 60 bis 30 mol % vorzugsweise 48 bis 35 mol% und insbesondere bevorzugt 48 bis 42 mol%, bezogen auf die Säurekomponenten i und ii eingesetzt.

Terephthal- und aliphatische Dicarbonsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-isobutyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

1,4-Butandiol ist aus nachwachsenden Rohstoffen zugänglich. WO-A 09/024294 offenbart ein biotechnologisches Verfahren zur Herstellung von 1,4-Butandiol ausgehend von unterschiedlichen Kohlehydraten mit Mikroorganismen aus der Klasse der Pasteurellaceae.

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : 1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden.

Die genannten Polyester können Hydroxy- und/oder Carboxyl-Endgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

In einer bevorzugten Ausführungsform werden 1 bis 80 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonit, Talkum, Glasfasern und Mineralfasern und zugesetzt.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder Cordenkafasern verstanden.

Als bevorzugte faserförmige Füllstoffe seien Glasfasern, Kohlenstofffasern, Aramid-Fasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Die biologisch abbaubaren Polyester A können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Die Herstellung der biologisch abbaubaren Polymermischungen aus den einzelnen Komponenten (Polyester A) und Polymer B kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Typische Polymermischungen enthalten:
- 30 bis 50 Gew.-% und bevorzugt 35 bis 45 Gew.-% eines Polyesters A und
- 50 bis 70 Gew.- % und bevorzugt 55 bis 65 Gew.-% Polymilchsäure, und
- 0 bis 2 Gew.-%, vorzugsweise 0,05 bis 1 Gew.-% eines Verträglichkeitsvermittlers C.

Es wurde gefunden, dass Folienbändchen mit einem Polymilchsäureanteil von über 75 Gew.-% weniger stark orientiert sind, auf einen Reckgrad unter 5 begrenzt sind und niedrige Zugfestigkeiten aufweisen.

Hingegen sind Folienbändchen mit einem Anteil von über 70 Gew.-% Polyester A in der Regel stark orientiert zeigen jedoch eine niedrige Reißdehnung.

Im den oben erwähnten bevorzugten und insbesondere bevorzugten Mischungsverhältnissen wird ein Optimum erreicht. In diesen Bereichen kann die Zugfestigkeit durch eine geeignete Temperatur- und/oder Prozessführung im Reckprozess auf ein für die jeweilige Anwendung erforderliches Maß eingestellt werden.

Als biologisch abbaubaren Polyester B ist Polymilchsäure geeignet. Polymilchsäure mit dem folgenden Eigenschaftsprofil wird bevorzugt eingesetzt:
- einer Schmelzvolumenrate (MVR bei 190° C und 2.16 kg nach ISO 1133 von 0.5 bis 15 bevorzugt 1 bis 9, besonders bevorzugt 2 bis 6 ml/10 Minuten)
- einem Schmelzpunkt unter 180° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks® das Ingeo® 2002 D, 4032 D, 8251 D, 3251 D und insbesondere 4042 D und 4043 D (Polymilchsäuren der Firma NatureWorks).

Bevorzugte Verträglichkeitsvermittler C sind Carbonsäureanhydride wie Maleinsäureanhydrid und insbesondere die zuvor beschriebenen epoxidgruppen-haltigen Copolymere auf Basis Styrol, Acrylsäureester und/oder Methacrylsäureester. Die Epoxidgruppen tragenden Einheiten sind vorzugsweise Glycidyl(meth)acrylate. Epoxidgruppen-haltige Copolymere des obengenannten Typs werden beispielsweise von der BASF Resins B.V. unter der Marke Joncryl^{®} ADR vertrieben. Als Verträglichkeitsvermittler besonders geeignet ist beispielsweise Joncryl^{®} ADR 4368.

Die eingangs erwähnten Polyester und Polymermischungen weisen eine hohe biologische Abbaubarkeit bei gleichzeitig guten Film- und Fasereigenschaften auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise lässt man gemäß DIN EN 13432 CO₂-freie Luft durch gereiften Kompost während des Kompostierens strömen. Der Kompost wird einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Für die Herstellung der Folienbändchen haben sich die in der Literatur bewährten Verfahren als geeignet erwiesen. Beispielsweise sei hier auf die Firmenschrift der Firma Oerlikon Barmag "Solutions for tape production" und auf das von U. Göschel in Acta Polymerica Vol. 40, issue 1 , 23-31.01.1989 beschriebene Mehrstufen-Zonenreckverfahren hingewiesen. Hierbei wird in einem ersten Schritt i) eine Flachfolie extrudiert, indem die zuvor beschriebene Polymermischung, z.B. ein Granulat enthaltend die Komponenten A, B und C, in einem Extruder aufgeschmolzen, gegebenenfalls gemischt und mittels Schmelzepumpe über eine Flachfoliendüse zu einer Folie mit einer Schichtdicke von 10 bis 250 µm verarbeitet wird. Nach der Abkühlung der Flachfolie im Wasserbad auf einer Kühlwalze wird in einem Schritt ii) die Folie zu Bändchen geschnitten. In einem Schritt iii) werden die Bändchen über eine Anordnung (den sogenannten Zonen) von Öfen, kalten oder beheizten Galetten verstreckt bzw. gereckt (nachstehend in beiden Fällen als "gereckt" bezeichnet). Beispielsweise können Kaltreckung und Heißreckung kombiniert werden. Der Heißreckung geht in der Regel eine Zonenwärmebehandlung voraus. Um möglichst Folienbändchen mit geringer Folienstärke herzustellen, werden die Folienbändchen nach dem Schneiden und vor dem Separieren durch eine Heizeinrichtung geführt, um eine Wärmebehandlung zu erhalten. Hierbei werden die Folienbändchen vorzugsweise durch Heißluft temperiert. Gleichzeitig kann durch ein nachgeordnetes Reckwerk eine Heißreckung folgen. Die Reckung der Bändchen erfolgt durch die unterschiedliche Geschwindigkeit der Galetten vor und nach dem Ofen. So wird beispielsweise ein Reckgrad (Streckverhältnis) von 8 eingestellt, indem die Galetten nach dem Ofen mit der 8 fachen Geschwindigkeit laufen wie die vorgeschalteten Galetten nach dem Schneiden der Flachfolie. Beim Reckprozess erfolgt eine Orientierung der Polymerketten. In Reckrichtung steigen Festigkeit und E-Modul stark an, senkrecht zu der Reckrichtung vermindern sich Festigkeit und E-Modul.

Die Schichtdicke der Bändchen beträgt nach der Reckung in der Regel 10 - 200 tex, vorzugsweise 40 bis 110 tex.

Die Bandbreite der Bändchen beträgt nach der Reckung im Allgemeinen 0,2 bis 4 mm, vorzugsweise 0,5 bis 2 mm.

Mit Hilfe eines optional installierten Fibrillators können zusätzlich Schnitte bzw. Schlitze in das Bändchen eingearbeitet werden. Diese fibrillierten Bändchen werden insbesondere als Nähgarn oder Bindegam eingesetzt. Die Aufspulung der Bändchen erfolgt im Allgemeinen mittels rotierender Spulenköpfe. Mittels spezieller Zwirnmaschinen können die Bändchen auch zu Zwirnen weiterverarbeitet werden.

Übliche Einsatzgebiete von Folienbändchen sind Bindegarn, rundgewebte Säcke, Flachgewebe, Big Bags, Teppich-Grundgewebe, Wandbespannungen, Geotextilie, Agrartextilien oder Kunstrasen.

Die Textilien können auch als Netze oder Filter ausgebildet sein. Beispielsweise kommen die Gewebe aus den erfindungsgemäßen Folienbändchen als Kaffeefilter, Einleger in Siphons von Spülmaschinen oder Geschirrspülbecken in Betracht. Da die Filter oder Einleger biologisch abbaubar sind, können sie zusammen mit dem organischen Küchenabfall entsorgt und kompostiert werden.

### Beispiele

### Einsatzstoffe

Bei der Herstellung der Folienbändchen kamen die folgenden Polyestermischungen zum Einsatz:

### Polyestermischung PM1 (Vergleich)

Als Referenzmaterial diente eine Polymermischung PM1 enthaltend 20 Gew.-% Ecoflex® F BX 7011 Polybutylenterephthalat-co-adipat der Fa. BASF SE, 79,8 Gew.-% Ingeo® D 4042 [Polymilchsäure der Fa. NatureWorks] und 0,2 Gew.-% Joncryl® ADR 4368 CS (ethoxyliertes Polymethacrylat der Fa BASF Nederland B.V.).

### Polyestermischung PM2

Eine Polymermischung PM2 enthaltend 40 Gew.-% Ecoflex® F BX 7011, 59,8 Gew.-% Ingeo® D 4042 und 0,2 Gew.-% Joncryl® ADR 4368 CS.

### Polyestermischung PM3 (Vergleich)

Eine Polymermischung PM3 enthaltend 55 Gew.-% Ecoflex® F BX 7011, 44,8 Gew.-% Ingeo® D 4042 und 0,2 Gew.-% Joncryl® ADR 4368 CS.

### Versuchsaufbau:

### 1. Bändchen-Reckanlage

Die Bändchen wurden auf einer für Polyolefine ausgelegten Bändchenreckanlage Oerlikon Barmag hergestellt. Eine Anlage oder Vorrichtungen zur Herstellung von Folienbändchen, welche im Wesentlichen der verwendeten Bändchen-Reckanlage entspricht ist u.a. in den Patentschriften DE102005049163A1 und DE10241371A1 sowie in der Firmenschrift der Firma Oerlikon Barmag "Solutions for tape production" beschrieben.

Die Ausrüstung der Bändchenreckanlage war wie folgt:
A. Folienextrudiereinheit
   - Extruder
   - Schmelzepumpe
   - Schmelzefilter
   - Breitschlitzdüse mir profilierten Düsenlippen
   - Temperierte Kühlwalze (Chill Roll) zur Abkühlung der mittels der Breitschlitzdüse ausgeformten Flachfolie
B. Folienscheideinrichtung zum Schneiden der Folienbahn in eine Vielzahl von Folienbändchen B. Verstreckeinrichtung bestehend aus einem Streckwerk (Galetten) vor dem Ofen, dem Heißluftofen selbst und 4 temperierten Streckwerken (Galetten) hinter dem Ofen.
   Alle Galetten sind einzeln angetrieben. Zum Verstecken der Folienbändchen werden diese innerhalb der Heißluftstrecke im Ofen temperiert und durch die unterschiedlich eingestellten Geschwindigkeiten der Streckwerke (Galetten) vor und nach dem Ofen in einen bestimmten Reckverhältnis verstreckt.
C. Abzugswerk
D. Aufwickeleinrichtung mit einer Vielzahl von Wickelstellen, wobei in jeder Wickelstelle eines der Bändchen zu einer Spule aufgewickelt wird.

### 2. Bändchenherstellung

Wie bereits erwähnt sind das Reckverhältnis, die Verweilzeit der Bändchen innerhalb der Heißluftstrecke des Ofens, sowie die Temperatur in der Heißluftstrecke und den Galetten wesentliche Parameter zur Beeinflussung der Festigkeitseigenschaften der gereckten Bändchen. Zur Einhaltung der festgelegten Festigkeitseigenschaften der Bändchen wie Reißfestigkeit und Reißdehnung bei einem bestimmten Titer (Bändchenstärke) wurde bei den Versuchen das Reckverhältnis konstant gehalten. Die Beeinflussung der mechanischen Eigenschaften erfolgte im Wesentlichen durch eine Anpassung der Verweilzeiten und/oder der Temperatur von Ofen und Galetten.

### Beispiel 1

### Durchgeführt mit Polymermischung PM2

| Einheit | Temperatur | Geschwindigkeit Ausstoß |
|---|---|---|
| Extruder | 180°C-210°C | 65 rpm |
| Schmelzepumpe | 210°C | 100 kg/h (16,5 1/min) |
| Sieb | 210°C | |
| Düse | 210°C | |
| Chill roll | 25°C | 12,5 m/min |
| Ofen | 91°C | |
| Galette 1 (vor Ofen) | | 13,5 m/min |
| Galette 2(nach Ofen) | | 91 m/min |
| Galette 3 (beheitzt) | 82°C | 90 m/min |

Die Foliendicke vor dem Zerschneiden in Bändchen betrug 160 µm und die Bändchenbreite vor dem Reckprozess 22 mm. Nach dem Reckprozess betrug die Bändchenbreite 1,0 mm und die Bändchendicke 52 tex. Das Reckverhältnis betrug 1: 6,7. Die Reißfestigkeit der Bändchen betrug 27 cN/tex und die Reißdehnung 30%.

### Beispiel 2

Der Versuch aus Beispiel 1 wurde wiederholt. Lediglich die Temperatur des Ofens und von Galette 3 wurde auf 100°C erhöht und das Reckverhältnis auf 1 : 7.5 hochgenommen. Die Bändchen wiesen bei gleicher Breite und Dicke wie in Beispiel 1 eine Reißfestigkeit von 28 cN/tex und eine Reißdehnung von 33%. Gleichzeitig war der Schrumpf verringert.

### Vergleichsbeispiel 3

Der Versuch aus Beispiel 1 wurde mit PM3 wiederholt. Die Foliendicke vor dem Zerschneiden in Bändchen betrug 120 µm und die Bändchenbreite vor dem Reckprozess 22 mm. Nach dem Reckprozess betrug die Bändchenbreite 2,5 mm und die Bändchendicke 100 tex. Das Reckverhältnis betrug 1: 5. Die Reißfestigkeit der Bändchen betrug 31 cN/tex und die Reißdehnung 20%.

### Vergleichsbeispiel 4

Der Versuch aus Vergleichsbeispiel 3 wurde mit PM1 wiederholt. Foliendicke, Bändchenbreite, Bändchendicke und Reckverhältnis waren identisch wie in Vergleichsbeispiel 3. Die Reißfestigkeit der Bändchen betrug 23 cN/tex und die Reißdehnung 26%.

Die Ergebnisse zeigen, dass zur Erreichung von ausreichenden Festigkeitseigenschaften ein PLA Anteil von vorzugsweise 50 - 70 Gew.-% förderlich ist. Ein geringerer PLA Anteil von z.B. 45% (Vergleichsbeispiel 3) führte zu einer reduzierten Reißdehnung, während ein zu hoher Anteil an PLA von z. B. 80% (Vergleichsbeispiel 4) zu einer reduzierten Reißfestigkeit bei den hier eingestellten Fahrbedingungen führt. Weiterhin muss festgehalten werden, dass der Prozess bei noch höherem PLA Anteil (80-100% PLA) nicht zu stabilen Extrusionsbedingungen führte. Die Folienbahn vor dem Schneiden oder beim Schneiden der Bändchen führte zu häufigen Abrissen der Folienbahn, was auf die zu spröde Folieneigenschaften zurückgeführt werden kann.

## Patentansprüche

1. Verwendungen von Polymermischungen enthaltend:
A) 30 bis 50 Gew.- % eines biologisch abbaubaren, aliphatisch-aromatischen Polyesters erhältlich durch Kondensation von:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,00 bis 2 Gew.-%, bezogen auf das Gesamtgewicht der Komponenten i bis iii, eines Kettenverlängerers und/oder Vernetzers ausgewählt aus der Gruppe bestehend aus: einem di oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
B) 50 bis 70 Gew.-% Polymilchsäure
und
C) 0 bis 2 Gew.-% eines Verträglichkeitsvermittlers,
zur Herstellung von Folienbändchen

2. Verwendung nach Anspruch 1, wobei die Komponenten i) und ii) des Polyesters A wie folgt definiert sind:
i) 52 bis 65 mol %, bezogen auf die Komponenten i bis ii, eines oder mehrere Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 48 bis 35 mol %, bezogen auf die Komponenten i bis ii, eines Terephthalsäurederivats.

3. Verwendung nach Anspruch 1 oder 2, wobei in Komponente i) des Polyesters A Sebazinsäure oder Gemische von Sebazinsäure mit den anderen Disäuren eingesetzt werden.

4. Verwendung nach den Ansprüchen 1 bis 3, wobei eine vorgemischte Polymermischung aus 30 bis 50 Gew.-% Komponente A, 50 bis 70 Gew.-% Komponente B und 0,05 bis 1 Gew.-% bezogen auf die Komponenten A und B eines Verträglichkeitsvermittlers C eingesetzt wird.

5. Verwendung nach Anspruch 4, wobei als Verträglichkeitsvermittler C 0,05 bis 1 Gew.-% eines Epoxidgruppen-haltigen Copolymers auf Basis Styrol, Acrylsäureester und/oder Methacrylsäureester eingesetzt wird.

6. Verwendung nach den Ansprüchen 1 bis 5, wobei eine Schichtdicke der Bändchen nach Reckung von 40 bis 110 tex eingestellt wird.

7. Verwendung nach den Ansprüchen 1 bis 6, wobei eine Bandbreite der Bändchen nach Reckung von 0,5 bis 2 mm eingestellt wird.

8. Verwendung nach den Ansprüchen 1 bis 8 zur Herstellung von Bindegarn, rundgewebten Säcken, Flachgewebe, Big Bags, Teppichgrund, Geotextilien, Agrartextilien, Filter oder Einleger für Siphons oder Kunstrasen.

## Claims

1. The uses of polymer blends comprising:
A) 30% to 50% by weight of a biodegradable, aliphatic-aromatic polyester obtainable by condensation of:
i) 40 to 70 mol%, based on components i to ii, of one or more dicarboxylic acid derivatives or dicarboxylic acids selected from the group consisting of succinic acid, adipic acid, sebacic acid, azelaic acid and brassylic acid;
ii) 60 to 30 mol%, based on components i to ii, of a terephthalic acid derivative;
iii) 98 to 102 mol%, based on components i to ii, of a C₂-C₈-alkylenediol or C₂-C₆-oxyalkylenediol;
iv) 0.00% to 2% by weight, based on the total weight of components i to iii, of a chain extender and/or crosslinker selected from the group consisting of a di- or polyfunctional isocyanate, isocyanurate, oxazoline, epoxide, carboxylic anhydride and/or an at least trifunctional alcohol or an at least trifunctional carboxylic acid;
v) 0.00% to 50% by weight, based on the total weight of components i to iv, of an organic filler selected from the group consisting of native or plasticized starch, natural fibers, wood flour and/or of an inorganic filler selected from the group consisting of chalk, precipitated calcium carbonate graphite, gypsum, conductivity grade carbon black, iron oxide, calcium chloride, dolomite, kaolin, silicon dioxide (quartz), sodium carbonate, titanium dioxide, silicate, wollastonite, mica, montmorillonites, talcum, glass fibers and mineral fibers; and
vi) 0.00% to 2% by weight, based on the total weight of components i to iv, of at least one stabilizer, nucleator, lubricating and release agent, surfactant, wax, antistat, antifoggant, dye, pigment, UV absorber, UV stabilizer or other plastic additive;
B) 50% to 70% by weight of polylactic acid
and
C) 0% to 2% by weight of a compatibilizer,
for producing slit film tapes

2. The use according to claim 1 wherein said components i) and ii) of said polyester A are defined as follows:
i) 52 to 65 mol%, based on said components i to ii, of one or more dicarboxylic acid derivatives or dicarboxylic acids selected from the group consisting of succinic acid, adipic acid, sebacic acid, azelaic acid and brassylic acid;
ii) 48 to 35 mol%, based on said components i to ii, of a terephthalic acid derivative.

3. The use according to claim 1 or 2 utilizing sebacic acid or mixtures of sebacic acid with the other diacids in component i of said polyester A.

4. The use according to claims 1 to 3 utilizing a premixed polymeric mixture of 30% to 50% by weight of component A, 50% to 70% by weight of component B and 0.05% to 1% by weight based on components A and B of a compatibilizer C.

5. The use according to claim 4 utilizing from 0.05% to 1% by weight of an epoxy-containing copolymer based on styrene, acrylic ester and/or methacrylic ester as compatibilizer C.

6. The use according to claims 1 to 5 wherein a layer thickness of the tapes after drawing of 40 to 110 tex is set.

7. The use according to claims 1 to 6 wherein a tape width of the tapes after drawing of 0.5 to 2 mm is set.

8. The use according to claims 1 to 8 for producing baler twine, circular-woven bags, flat-woven fabrics, Big Bags, carpet backing, geotextiles, agrotextiles, filters or inlays for waste traps, or artificial lawn.

## Revendications

1. Utilisations de mélanges polymères, contenant :
A) 30 à 50% en poids d'un polyester aliphatique-aromatique, biodégradable, pouvant être obtenu par condensation de :
i) 40 à 70% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique, l'acide sébacique, l'acide azélaïque et l'acide brassylique ;
ii) 60 à 30% en mole, par rapport aux composants i à ii, d'un dérivé d'acide téréphtalique ;
iii) 98 à 102% en mole, par rapport aux composants i à ii, d'une C₂-C₈-alkylènediol ou d'un C₂-C₆-oxyalkylènediol ;
iv) 0,00 à 2% en poids, par rapport au poids total des composants i à iii, d'un agent d'allongement de chaîne et/ou d'un réticulant, choisi dans le groupe constitué par : un isocyanate, un isocyanurate, une oxazoline, un époxyde, un anhydride de l'acide carboxylique difonctionnel ou polyfonctionnel et/ou un alcool au moins trifonctionnel ou un acide carboxylique au moins trifonctionnel ;
v) 0,00 à 50% en poids, par rapport au poids total des composants i à iv, d'une charge organique choisie dans le groupe constitué par : l'amidon naturel ou plastifié, les fibres naturelles, la farine de bois et/ou d'une charge inorganique choisie dans le groupe constitué par : la craie, le carbonate de calcium précipité, le graphite, le plâtre, la suie conductrice, l'oxyde de fer, le chlorure de calcium, la dolomite, le kaolin, le dioxyde de silicium (quartz), le carbonate de sodium, le dioxyde de titane, le silicate, la wollastonite, le mica, la montmorillonite, le talc, les fibres de verre et les fibres minérales, et
vi) 0,00 à 2% en poids, par rapport au poids total des composants i à iv, d'au moins un stabilisant, agent de nucléation, lubrifiant et agent de démoulage, agent tensioactif, cire, antistatique, agent antibuée, colorant, pigment, absorbant des UV, stabilisant des UV ou autre additif pour matériaux synthétiques ;
B) 50 à 70% en poids de poly(acide lactique)et
C) 0 à 2% en poids d'un promoteur de compatibilité, pour la production de bandelettes de feuille.

2. Utilisation selon la revendication 1, les composants i) et ii) du polyester A étant définis comme suit :
i) 52 à 65% en mole, par rapport au composants i à ii, d'un ou de plusieurs dérivés d'acide dicarboxylique ou d'un ou de plusieurs acides dicarboxyliques choisis dans le groupe constitué par : l'acide succinique, l'acide adipique l'acide sébacique, l'acide azélaïque et l'acide brassylique ;
ii) 48 à 35% en mole, par rapport aux composants i à ii, d'un dérivé d'acide téréphtalique.

3. Utilisation selon la revendication 1 ou 2, de l'acide sébacique ou des mélanges d'acide sébacique avec les autres diacides étant utilisé(s) dans le composant i) du polyester A.

4. Utilisation selon les revendications 1 à 3, un mélange polymère mélangé au préalable constitué par 30 à 50% en poids de composant A, 50 à 70% en poids de composant B et 0,05 à 1% en poids, par rapport aux composants A et B, d'un promoteur de compatibilité C étant utilisé.

5. Utilisation selon la revendication 4, 0,05 à 1% en poids d'un copolymère contenant des groupes époxyde à base de styrène, d'ester de l'acide acrylique et/ou d'ester de l'acide méthacrylique étant utilisé comme promoteur de compatibilité C.

6. Utilisation selon les revendications 1 à 5, une épaisseur de couche des bandelettes après étirage de 40 à 110 tex étant réglée.

7. Utilisation selon les revendications 1 à 6, une largeur de bande des bandelettes après étirage de 0,5 à 2 mm étant réglée.

8. Utilisation selon les revendications 1 à 8, pour la production de ficelle lieuse, de sacs à tissage circulaire, de tissés plats, de big bags, de soubassements, de géotextiles, de textiles agricoles, de filtres ou d'inserts pour siphons ou de gazons artificiels.
